# EUROPÄISCHE PATENTANMELDUNG

(11) **EP 2 153 917 A2**
(43) Veröffentlichungstag der Anmeldung: **17.02.2010**
(21) Anmeldenummer: 09010375.5
(22) Anmeldetag: 12.08.2009
(51) Int. Cl.: B21D 39/20, B21D 41/02

(54) **Aufweitwerkzeug für Rohre und Rohrpresskupplung**

(30) Priorität: 13.08.2008 CH 12692008
(71) Anmelder: Finemon AG, 6300 Zug (CH)
(72) Erfinder: Reckzeh, Manfred, 63457 Hanau (DE)
(74) Vertreter: Schalch, Rainer

(57) **Zusammenfassung**

Bei einem Aufweitwerkzeug (1) für Rohrenden ist ein Aufweitkörper (22) mit einer diesen umgebenden Begrenzungshülse (10) versehen. Die Aufweitung erfolgt damit gegen die Begrenzungshülse, die eine definierte Aufweitung im Werkzeug ergibt. Damit ist das Werkzeug gut für Mehrschichtverbundrohre geeignet, die zum Aufreissen neigen.

## Beschreibung

### Hintergrund der Erfindung

Die Erfindung betrifft ein Aufweitwerkzeug zum Aufweiten des Endes eines Rohres, welches Werkzeug ein Gehäuse und einen durch eine Betätigungsanordnung betätigbaren Aufweitkörper aufweist. Die Erfindung betrifft ferner eine Verwendung des Werkzeugs sowie ein Verfahren zum Aufweiten des Endes eines Mehrschichtverbundrohres oder dünnwandigen Metallrohres.

Weiter betrifft die Erfindung eine Rohrpresskupplung sowie ein Verfahren zur Bildung einer Rohrpressverbindung.

### Stand der Technik

Besonders im Bereich haustechnischer Installationen haben sich in den vergangenen Jahren Verpressungen zum Standardverbindungsverfahren für Rohrleitungen entwickelt. Ferner ist ein zunehmender Einsatz von Mehrschichtverbundrohren zu beobachten. Diese Rohre bestehen aus metallischen und nichtmetallischen Schichten, die durch Kleber sowie Haftvermittler miteinander verbunden sind. Der Vorteil von Mehrschichtverbundrohren besteht in der Reduktion der benötigten kostenintensiven Metallmengen und guter Verarbeitungseigenschaften (z.B. leichter Biegbarkeit), ohne dass bei ihnen die Vorteile metallischer Rohre verlorengehen. Bei einem verbreiteten Typ von Mehrschichtverbundrohren ist eine aus Aluminium bestehende Zwischenschicht aussen und innen mit einer Kunststoffschicht überzogen. Als Ersatz für massive Kupferrohre, die für Trinkwasserleitungen hinsichtlich der lebensmittelchemischen Eigenschaften in der Fachwelt nach wie vor als optimal angesehen werden, wurden Mehrschichtverbundrohre mit einer dünnen Kupferschicht im Inneren sowie einer aussen liegenden Kunststoffummantelung entwickelt. Gerade bei letzteren Rohrtypen stösst jedoch der Einsatz von Presskupplungen auf gewisse Probleme.

Grundsätzlich unterscheidet man zwischen Rohrpresskupplungen vom aussendichtenden Typ, die ohne eine in das Rohrende eingesteckte Steckhülse auskommen, sowie innendichtenden Rohrpresskupplungen, bei denen eine Stützhülse erforderlich ist. Für Verpressungen von Mehrschichtverbundrohren - zumindest bei kleinen Rohrquerschnitten, wie sie in der Installationstechnik gebräuchlich sind - sind erfahrungsgemäss aufgrund der ungünstigeren Kompressionseigenschaften lediglich innendichtende Rohrpresskupplungen unter Verwendung einer Stützhülse verwendbar. Die Stützhülsen sollen, da diese mit dem in den Rohrleitungen geführten Medium in Kontakt kommen, aus einem mit Kupfer elektrochemisch vergleichbaren Material - in der Regel Messing - gefertigt werden. Aufgrund der bei einer Verpressung wirkenden relativ hohen Radialkräfte muss die Wandstärke dieser innenliegenden Stützhülsen relativ hoch dimensioniert werden, was einerseits zu hohen Materialkosten und andererseits - was in der praktischen Anwendung sehr nachteilig ist - zu einer Reduktion des lichten Rohrdurchmesser bei konventionellen Stützhülsen im Bereich kleiner Rohrdurchmesser (z.B. 3/4 Zoll) um ca. 30% führt, was bei mehreren, in Reihe geschalteten Verpressungen zu erheblichen und nicht mehr akzeptablen Druck- und Strömungsverlusten führt.

Aus dem Bereich der Rohrverpressungen für Kunststoffrohre ist es bekannt, diese vor dem Verpressen mittels eines Aufweitwerkzeuges aufzuweiten und im aufgeweiteten Zustand, den die Kunststoffrohre aufgrund des Memory-Effektes eine gewisse Zeit beibehalten, auf eine Stützhülse zu schieben, wodurch die Querschnittverengung durch die Wanddicke der Stützhülsen mehr oder weniger kompensiert werden kann. Hierfür verwendete Aufweitwerkzeuge weisen einen hohlzylindrischen Aufweitkörper aus einer Mehrzahl von aneinander anliegend angeordneten Aufweitkörperteilen auf, in deren Innenhohlraum, der konisch ausgebildet ist, für die Aufweitung ein Dorn vorgeschoben wird, wodurch die Aufweitkörperteile expandieren und damit das Rohrende, in welches der Aufweitkörper eingeführt worden ist, aufweiten.

Der Einsatz entsprechender Aufweitwerkzeuge für Mehrschichtverbundrohre hat sich jedoch als problematisch erwiesen, da die einzelnen Teile des Aufweitkörpers des Aufweitwerkzeuges die Aufweitkräfte nicht gleichmässig über den Umfang verteilen. Bei Kunststoffrohren stellt dies auf Grund von deren Elastizität kein Problem dar. Bei Mehrschichtverbundrohren hat sich jedoch gezeigt, dass die ungleichmässige Kräfteverteilung schon bei geringen Aufweitmassen zu Rissen in der Metallschicht des Verbundrohres und damit zur Unbrauchbarkeit des Rohrendes führt. Dieses Problem kann auch bei dünnwandigen Metallrohren auftreten.

In EP-A-1 674 241 wird zur Behebung dieses Nachteils eine Glättungshülse vorgeschlagen, welche zwischen den Aufweitkörper des Aufweitwerkzeuges und der Innenseite des Rohres angeordnet wird. Damit kann eine ungleichmässige Verformung durch die einzelnen Aufweitsegmente vermindert werden, ein Reissen der Metallschicht ist aber weiterhin möglich.

### Darstellung der Erfindung

Der Erfindung liegt die Aufgabe zu Grunde, ein verbessertes Aufweitwerkzeug zu schaffen, welches insbesondere für Mehrschichtverbundrohre und für dünnwandige Metallrohre geeignet ist.

Die Aufgabe wird bei einem Aufweitwerkzeug der eingangs genannten Art dadurch gelöst, dass das Werkzeug eine am Werkzeuggehäuse angeordnete, den Aufweitkörper mit einem vorbestimmten Abstand umgebende Begrenzungshülse aufweist, welche eine im Wesentlichen hohlzylindrische Aufweitbegrenzung für das aufzuweitende Rohr bereitstellt.

Dadurch, dass die hohlzylindrische Begrenzungshülse des Werkzeuges eine Begrenzung für die Aufweitung durch das Werkzeug bereitstellt, deren Innendurchmesser dem durch die Aufweitung angestrebten Aussendurchmesser des Rohrendes entspricht, kann eine Beschädigung des Rohres beim Aufweiten verhindert werden.

Während des Aufweitvorganges führt diese Begrenzungshülse dazu, dass übermässige Verformungen, die durch einzelne Segmente des Aufweitwerkzeuges verursacht werden und möglicherweise durch Inhomogenitäten der Metallschicht (z.B. bei deren Schweissnaht) begünstigt werden, verhindert werden, da die Hülse als Begrenzung für den Aufweitvorgang dient. Ferner werden evtl. Unrundheiten und Massungenauigkeiten des Rohres, wie sie z.B. beim Ablängen entstehen oder auf Grund von Fertigungstoleranzen vorliegen, beseitigt, so dass eine sonst erforderliche Bearbeitung des Rohrendes entfallen kann.

Der Innendurchmesser der Begrenzungshülse des Werkzeuges wird so gewählt, dass bei einem vorgegebenen Rohrtyp eine Beschädigung bei der Aufweitung durch die Begrenzung möglichst sicher vermieden wird. Die Aufweitung wird aber innerhalb dieser Grenze möglichst so gross gewählt, dass die Wanddicke der Stützhülse der Rohrpressverbindung weitgehend oder vollständig kompensiert wird.

Bei einer bevorzugten Ausführungsform des Aufweitwerkzeugs ist die Begrenzungshülse auswechselbar am Werkzeug befestigt, insbesondere mittels eines Schraubgewindes. Dies erlaubt die einfache Auswechslung, wobei es besonders bevorzugt ist, wenn die Begrenzungshülse auch zum Halten des Aufweitkörpers dient, so dass mit Entfernung der Begrenzungshülse auch der Aufweitkörper zur Auswechslung zugänglich ist.

In einer bevorzugten Ausführungsform ist der Aufweitkörper ein radial elastisch dehnbarer Körper, welcher mittels Fluiddruck aufgeweitet wird. Dies ergibt eine besonders gleichmässige Aufweitung und vermindert dadurch die Beschädigungsgefahr für ein Verbundrohr noch weiter. Auch werden Abdrücke oder Markierungen im Rohr durch das Aufweitwerkzeug sicher verhindert. Der elastische Aufweitkörper, der insbesondere aus einem Elastomer gebildet ist, wird z.B. pneumatisch oder hydraulisch aufgeweitet, wobei die Betätigungsanordnung den Fluiddruck bzw. den pneumatischen oder hydraulischen Druck händisch oder motorisch aufbauen kann oder über ein vorgefülltes, auswechselbares Druckluftreservoir verfügen kann. Der elastische Aufweitkörper ist derart ausgebildet, dass seine Ausdehnung im Wesentlichen radial erfolgt. Dies kann unterstützt werden, indem der Aufweitkörper am rohrseitigen Ende innen mit einem Befestigungsmittel versehen ist, an welchem eine Halterung befestigbar ist, die die Aufweitung in Längsrichtung verhindert. Vorzugsweise wird diese Halterung durch die Druckeinbringleitung in den Aufweitkörper gebildet.

Bei einer anderen Ausführungsform wird ein aus mehreren Aufweitkörperteilen bestehender Aufweitkörper vorgesehen, dessen Aufweitkörperteile durch die Betätigungsanordnung radial auseinander bewegbar sind. Bevorzugt wird ein Aufweitkörper verwendet, der nur drei oder vier Aufweitkörperteile aufweist. Dies ergibt eine grössere anliegende Fläche des Aufweitkörpers an der Rohrinnenseite bei der Aufweitung.

Der Erfindung liegt weiter die Aufgabe zu Grunde, eine verbesserte Rohrpressverbindung zu schaffen.

Diese Aufgabe wird mit einer Rohrpresskupplung gemäss den Ansprüchen 16 bis 18 gelöst.

### Kurze Beschreibung der Zeichnungen

Im Folgenden werden Ausführungsbeispiele der Erfindung anhand der Figuren näher erläutert. Dabei zeigt
Figur 1 eine Frontalansicht auf ein Aufweitwerkzeug gemäss der Erfindung mit dem Aufweitkörper in dessen Einführungsposition;
Figur 2 eine Vertikalschnittansicht durch das Aufweitwerkzeug in der Einführungsposition;
Figur 3 die Frontalansicht von Figur 1 mit auseinander bewegten Aufweitkörperteilen;
Figur 4 eine Vertikalschnittansicht gemäss Figur 2 in der aufgeweiteten Position;
Figur 5 eine Seitenansicht eines Aufweitkörpers;
Figur 6 eine Schnittansicht des Aufweitkörpers entlang der Schnittlinie A-B von Figur 5;
Figur 7 eine Seitenansicht des Aufweitkörpers von Figur 5 mit auseinander bewegten Teilen;
Figur 8 eine Schnittansicht entlang der Linie C-D von Figur 7;
Figur 9 eine weitere Ausführung eines Ausweitkörpers in Seitenansicht;
Figur 10 eine bevorzugte Ausführungsform mit einem elastisch aufweitbaren Aufweitkörper in Längsschnittansicht und mit dem Aufweitkörper in Ruhestellung;
Figur 11 die Ansicht von Figur 10 mit aufgeweitetem Aufweitkörper;
Figur 12 den Aufweitkörper der Figuren 10 und 11 in Schnittdarstellung;
Figur 13 eine andere Ausführungsform eines elastisch aufweitbaren Aufweitkörpers;
Figur 14 den Aufweitkörper von Figur 13 mit darin angeordnetem Druckeinbringleitung mit Befestigung desselben am rohrseitigen Ende des Aufweitkörpers;
Figur 15 die Druckeinbringleitung von Figur 14;
Figur 16 eine Teildarstellung einer Rohrpresskupplung in geschnittener Darstellung;
Figur 17 die Rohrpresskupplung von Figur 16 mit eingeführtem Rohr vor der Verpressung; und
Figur 18 eine fertig verpresste Rohrpressverbindung.

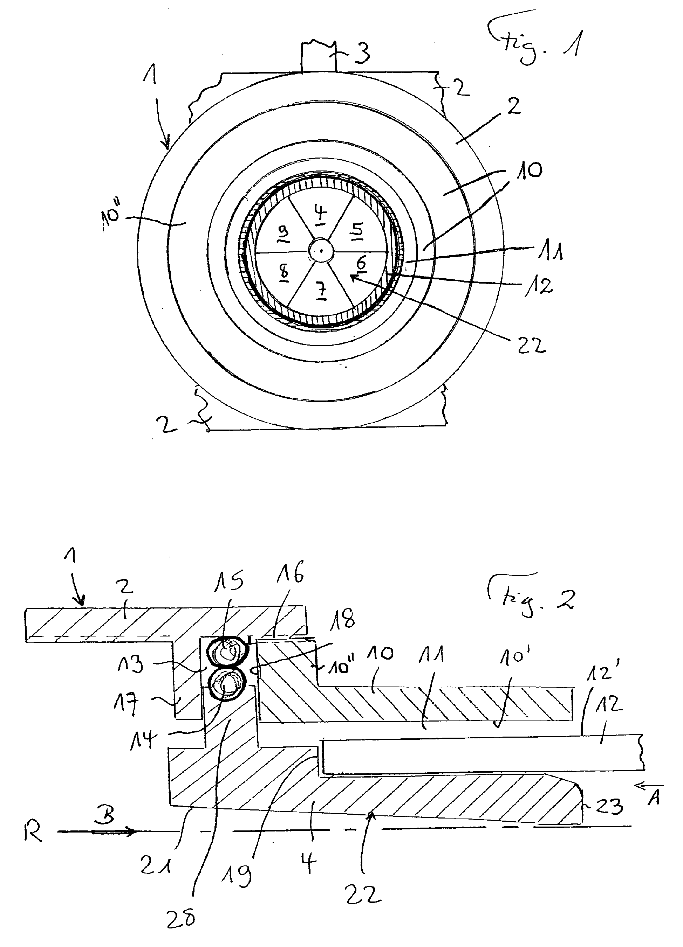

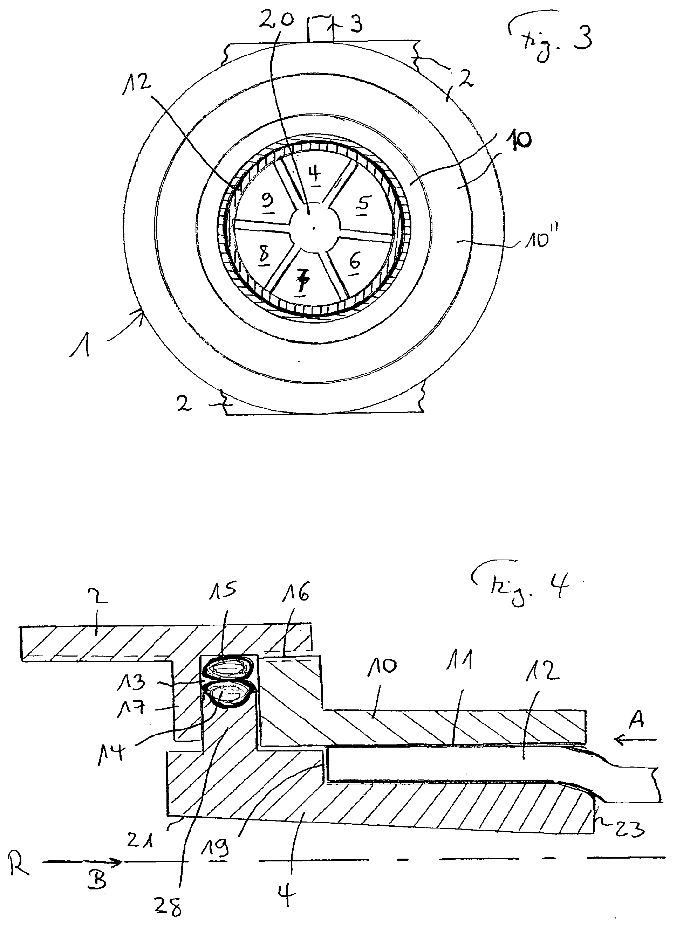

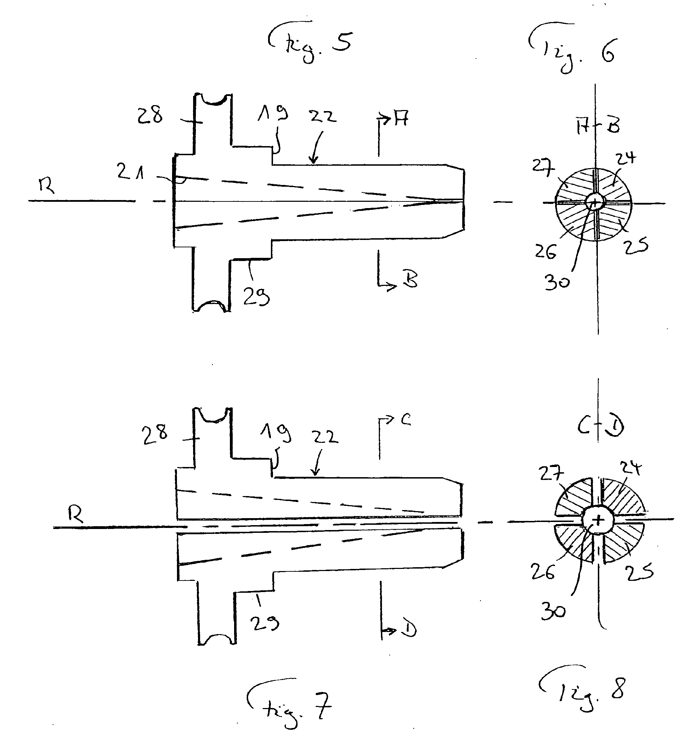

Anhand der Figuren 1-4 wird eine erste Ausführungsform des Aufweitwerkzeuges beschrieben. Figur 1 zeigt dabei eine Frontalansicht auf das Werkzeug von vorne bzw. eine Ansicht in Richtung des Pfeiles A von Figur 2. Figur 2 zeigt eine Vertikalschnittansicht durch einen Teil des Werkzeuges, wobei nur die Teile oberhalb der Längsmittelachse R dargestellt sind, da das Werkzeug betreffend die für die Erfindung relevanten Elemente des Werkzeugs im Wesentlichen rotationssymmetrisch um diese Achse R aufgebaut ist. In Figur 1 ist der Aufweitkörper 22 ersichtlich, welcher auf an sich bekannte Weise aus mehreren Aufweitkörperteilen 4-9 aufgebaut ist. Dieser Aufweitkörper 22 ist in einem Werkzeuggehäuse 2 angeordnet, welches in den Figuren nur angedeutet ist und in der dem Fachmann für diese Werkzeuge bekannten Weise gebildet ist, soweit nicht nachfolgend etwas Abweichendes geschildert wird. Das Werkzeug kann ein handbetätigtes Werkzeug sein oder allenfalls ein pneumatisch oder elektrisch betätigtes Aufweitwerkzeug. In den Figuren ist lediglich mit dem Hebelabschnitt 3 ein Betätigungsmittel angedeutet sowie in den Figuren 6 und 8 mit dem Dorn 30 das hauptsächliche Betätigungsmittel zur Aufspreizung des Aufweitkörpers angedeutet, was noch erläutert wird. In der in den Figuren 1 und 2 dargestellten Einführungsposition liegen die Teile 4-9 des Aufweitkörpers im Wesentlichen aneinander an und bilden einen Aufweitkörper 22 mit einem definierten Umfang. Der Aufweitkörper ist dabei in der Regel von zylindrischer Form. In dieser Einführungsposition kann das aufzuweitende Ende des Rohres 12 auf den Aufweitkörper 22 aufgeschoben werden, wobei die Aufschiebelänge durch einen Anschlag 19 des Aufweitkörpers begrenzt sein kann. Die einzelnen Teile 4-9 des Aufweitkörpers werden z.B. durch ein elastisches Element 14 zusammengehalten, welches z.B. ein O-Ring aus Gummi sein kann. Der derart gebildete Aufweitkörper 22 ist im Gehäuse 2 des Aufweitwerkzeuges 1 gehalten und geführt, wobei dies im gezeigten Beispiel durch eine ringförmige Nut 13 erfolgt, welche durch einen Steg 17 und einen Anschlag 18 gebildet ist. In dieser Nut ist ein Steg 28 des Aufweitkörpers 22 aufgenommen, der an den einzelnen Teilen 4 bis 9 ausgebildet ist. Der Aufweitkörper weist ferner eine innere Öffnung 20 auf, deren Wandung 21 konisch hin zur Stirnseite 23 des Aufweitkörpers 22 verläuft. Dies ermöglicht die Aufweitbewegung durch das Einführen eines konischen Dornes in den Hohlraum 20, welcher die einzelnen Teile des Aufweitkörpers radial nach aussen presst, was bekannt ist. Diese Aufweitstellung ist in den Figuren 3 und 4 und auch 8 dargestellt. Die Betätigung des in den Figuren 1-4 nicht dargestellten Dornes in Richtung des Pfeiles B wird hier nicht weiter erläutert, da sie dem Fachmann bei diesen Werkzeugen bekannt ist. Der Dorn kann dabei durch handbetätigte Hebel in Richtung B angetrieben werden und auch in Gegenrichtung wieder zurückgezogen werden oder der Dorn kann pneumatisch, hydraulisch oder auf andere Weise angetrieben sein. Ersichtlich ist in Figur 3, wie dadurch die einzelnen Teile 4-9 des Aufweitkörpers auseinandergetrieben werden, so dass der Aufweitkörper dadurch einen grösseren Umfang erhält. Dieser ist weiterhin im Wesentlichen zylindrisch, weist aber die Hohlräume zwischen den einzelnen Teilen 4-9 auf. In Figur 4 ist ersichtlich, wie das Aufweitkörperteil 4 radial nach aussen hin gedrückt ist, womit der Steg 28 tiefer in die Nut 13 eintaucht. In dieser ist ein elastisches Element 15 vorgesehen, welches z.B. wiederum ein O-Ring aus Gummi sein kann, welches den Aufweitkörper im Werkzeuggehäuse zentriert und beim Auseinanderpressen der Aufweitkörperteile entsprechend nachgibt.

Das bisher beschriebene Aufweitwerkzeug entspricht im Wesentlichen dem Stand der Technik und weist den Nachteil auf, dass empfindliche Rohre und insbesondere Mehrschichtverbundrohre bei der Aufweitung beschädigt werden können. Das in den Figuren 1 und 3 geschnitten dargestellte Mehrschichtverbundrohr 12 weist eine Metallschicht und eine innere und äussere Kunststoffschicht auf. Das Aufweitwerkzeug 1 gemäss der Erfindung weist nun zusätzlich eine Begrenzungshülse 10 auf, die mit ihrer Innenseite 10' eine Anlage für das aufgeweitete Rohrende bildet und die Aufweitung auf das zulässige Mass begrenzt. In der Einführungsposition der Figuren 1 und 2, in welcher das Rohr 12 auf den Aufweitkörper 22 geschoben werden kann bzw. der Aufweitkörper in das Rohr eingeführt werden kann, ist somit zwischen der Innenwandung 10' der Begrenzungshülse 10 und der Rohraussenseite 12' ein ringförmiger Hohlraum 11 vorhanden. Die radiale Erstreckung zwischen der Aussenseite 12' des Rohres und der Innenseite 10' der Begrenzungshülse entspricht dabei der Hälfte der maximal möglichen Aufweitung. In den Figuren 3 und 4 ist demgemäss dargestellt, dass die Aufweitung des Rohrendes des Rohres 12 soweit erfolgt ist, bis das Rohr 12 an der Innenseite 10' der Begrenzungshülse anliegt. Damit ist die Aufweitung begrenzt und beendet und eine Beschädigung des Rohrendes kann sicher vermieden werden.

In der dargestellten bevorzugten Ausführungsform ist die Begrenzungshülse lösbar am Werkzeug 1 befestigt, wozu z.B. ein Aussengewinde 16 an einem Absatz 10" der Hülse 10 vorgesehen sein kann, welches mit einem entsprechenden Innengewinde am Gehäuse 2 zusammenwirkt, um die Hülse am Gehäuse festschrauben zu können. Weiter ist es bevorzugt, wenn die Hülse 10 zugleich eine Begrenzung der Aufnahmenut 13 für den Aufweitkörper 22 bildet. Auf diese Weise kann sehr einfach durch Entfernen der lösbaren Hülse 10 auch der Aufweitkörper aus dem Werkzeug entnommen werden und gegebenenfalls durch einen anders dimensionierten Aufweitkörper ersetzt werden. Durch entsprechende Aufweitkörper und Hülsen verschiedener Dimensionen kann somit eine einfache Anpassung an den Rohrdurchmesser und die Art des Rohres, insbesondere dessen Mehrschichtaufbau erfolgen.

Die Figuren 5-8 zeigen eine weitere Ausführungsform des Aufweitkörpers 22, welcher anstelle des in den Figuren 1-4 gezeigten Aufweitkörpers in das Aufweitwerkzeug 1 einsetzbar ist. Gleiche Bezugszeichen bezeichnen dabei wiederum gleiche Elemente. Wie in der Schnittansicht der Figuren 6 und 8 ersichtlich, welche einmal die Einführposition und das andere mal die aufgeweitete Position darstellen, besteht der Aufweitkörper 22 in diesem Beispiel nur aus vier Teilen 24 bis 27 anstelle von sechs Teilen. Dies ist bevorzugt, um eine möglichst grosse am Rohr anliegende Oberfläche des Aufweitkörpers zu erzielen bzw. die Anzahl der Zwischenräume zwischen den Aufweitkörperteilen 24-27 möglichst gering zu halten. Dies fördert das gleichmässige Aufweiten des Rohres. Auch eine nicht dargestellte Variante mit drei Aufweitkörperteilen ist vorteilhaft. In den Figuren 6 und 8 ist ferner ein Dorn 30 angedeutet, welcher auf bekannte Weise durch Vorschieben in Richtung B (Figuren 2 und 4) die Aufweitkörperteile 24-27 ausgehend von der Einführposition bis zur maximalen Aufweitposition auseinandertreibt. Die maximale Aufweitposition wird dabei wiederum durch die Begrenzungshülse 10 definiert.

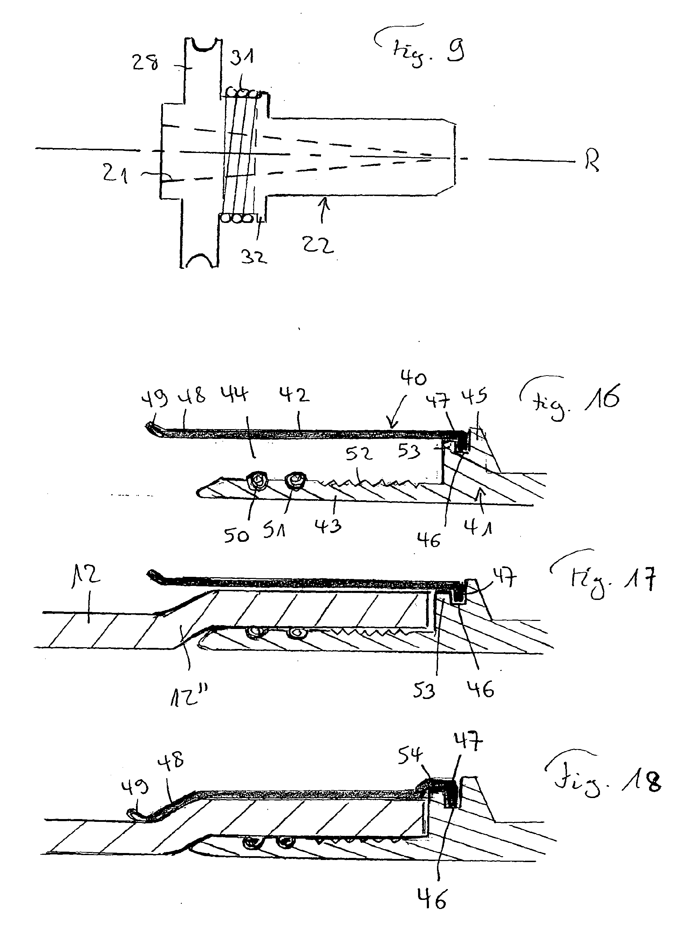

Figur 9 zeigt eine weitere Ausführungsform ähnlich derjenigen der Figuren 5-8, wobei hier auf dem Absatz 29 ein weiteres elastisch verformbares Haltemittel 31 angeordnet ist, welches zusätzlich zum Element 14 den Aufweitkörper 22 zusammenhält. Das Element 31 kann eine Feder sein oder kann wiederum ein gummielastisches Element sein. Seine Lage auf dem Absatz 29 kann durch eine umlaufende Nase 32 fixiert werden.

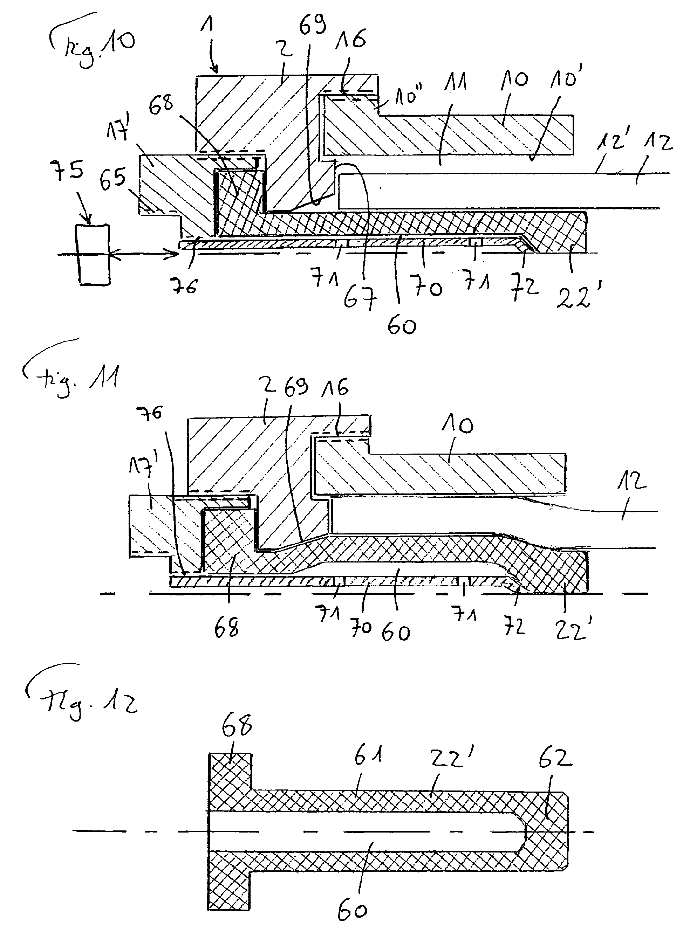

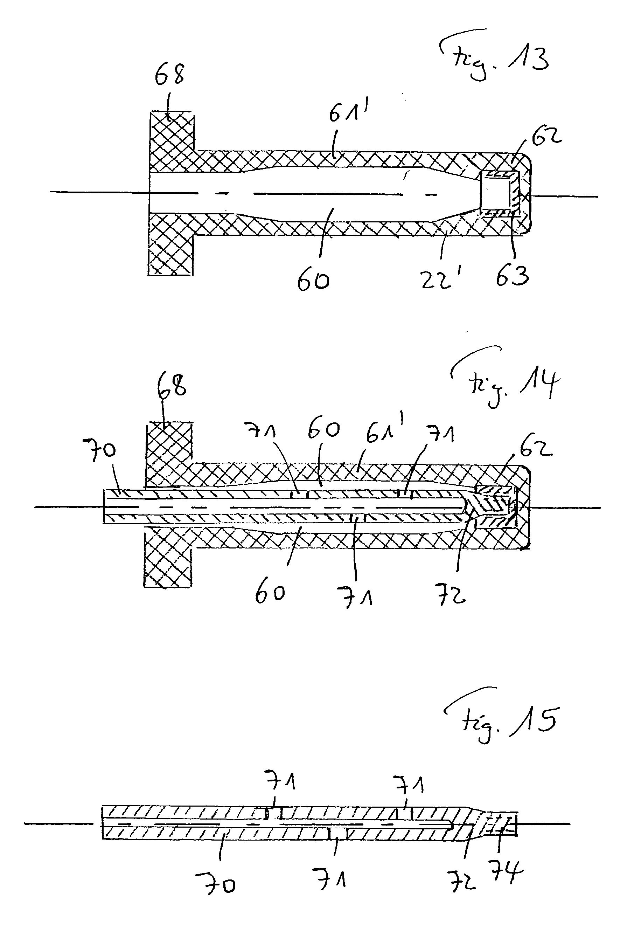

Die Figuren 10 bis 12 zeigen ein erstes Beispiel und die Figuren 13 bis 15 ein weiteres Beispiel einer bevorzugten Ausführungsform, bei welcher der Aufweitkörper 22' aus einem formfesten aber elastisch verformbaren Kunststoffmaterial oder Gummimaterial (einem Elastomer) gebildet ist, das sich unter Krafteinwirkung elastisch verformt und bei Wegfall der Kraft wieder in die ursprüngliche unverformte Gestalt zurückkehrt. Der Aufweitkörper ist dabei in Form eines im Ruhezustand im Wesentlichen die Form eines Zylinders aufweisenden Körpers mit einem Innenhohlraum gebildet, der ein radiales Aufweiten des Zylinders durch Einbringung eines Fluides unter Druck erlaubt. Damit kann der Aufweitkörper das Rohrende des Rohres 12 aufweiten und gegen die Begrenzungshülse 10 drücken, wie dies grundsätzlich für die vorherigen Ausführungen erläutert worden ist. Die Ausgestaltung mit einem elastischen Aufweitkörper ergibt indes eine noch gleichmässigere und lückenlose Aufweitung des Rohres, was dieses schont. Die Figuren 10 und 11 zeigen einen Teil eines derart ausgeführten Aufweitwerkzeugs 1, einmal in der Einführungsposition, bei welcher das Ende des Rohrs über den Aufweitkörper 22' geschoben wird (Figur 10) und einmal in der Aufweitstellung, in welcher das Rohrende aufgeweitet worden ist (Figur 11). Der Aufweitkörper 22' dieser Ausführung ist in Figur 12 alleine dargestellt. In den Figuren 10 bis 15 bezeichnen gleiche Bezugszeichen, wie sie in den vorherigen Figuren verwendet worden sind, identische oder funktionsgleiche Teile; auch für diese Ausführungen sind die wesentlichen Teile rotationssymmetrisch zur Längsmittelachse ausgebildet und daher sind die Schnittzeichnungen zum Teil nur oberhalb dieser Längsmittelachse ausgeführt.

Das Aufweitwerkzeug weist wiederum ein nur teilweise dargestelltes Gehäuse 2 auf sowie die Begrenzungshülse 10. Diese kann einstückig mit dem Gehäuse ausgeführt sein oder daran lösbar befestigt sein, wie dies mit dem Gewinde 16 im Gehäuse und an der Hülse 10 angedeutet ist. Im Gehäuse ist der Aufweitkörper 22' auf beliebige Weise befestigt, so dass er mit seinem aufweitbaren Abschnitt zusammen mit der Begrenzungshülse den ringförmigen Raum 11 bildet, in dem die Aufweitung erfolgt. In dem gezeigten Beispiel ist der Aufweitkörper 22' mit Hilfe eines an diesem betätigungsseitig an dessen Ende vorgesehenen Flansches 68 im Werkzeugehäuse befestigt, indem dieser Flansch (der ringförmig ununterbrochen oder mit Unterbrechungen verlaufen kann) im Gehäuse lösbar festgelegt wird. Dazu ist in dem Beispiel ein Einschraubteil 17' vorgesehen. Der Aufweitkörper weist in diesem Beispiel abgesehen vom Flansch 68 und dem vorderen, rohrseitigen Ende 62 entlang des dazwischen liegenden Abschnittes 61 im Wesentlichen dieselbe Wandstärke auf, was im unverformten Ruhezustand den gleichmässig zylindrischen Hohlraum 60 ergibt. Am vorderen Ende 62 ist der Aufweitkörper mit einer grösseren Wandstärke versehen, da dort keine Aufweitung erfolgen soll. Das Fluid zur Aufweitung des Aufweitkörpers 22' wird über eine Fluidleitung 70 mit Fluiddurchlässen 71 in den Hohlraum 60 eingebracht. An ihrem vorderen Ende 72 ist die Leitung vorzugsweise geschlossen. Die Leitung 70 ist im Gehäuse befestigt, z.B. an diesem angeschraubt, was mit dem Gewinde 76 angedeutet ist. Diese Befestigung ist fluiddicht ausgeführt, so dass das unter Druck mittels der Leitung eingebrachte Fluid im Hohlraum 60 verbleibt und den Aufweitkörper 22' radial aufweitet. Dies ist in Figur 11 dargestellt, in welcher das Fluid die Aufweitung des Aufweitkörpers 22' und damit des Rohres 12 bewirkt hat. Wird das Fluid dann über die Leitung 70 wieder aus dem Hohlraum 60 abgelassen, so kehrt der elastomere Aufweitkörper 22' von der aufgeweiteten Stellung von Figur 11 wieder in die Stellung von Figur 10 zurück, so dass das aufgeweitete Rohr aus dem Hohlraum 11 entnommen werden kann. Die Aufweitung ist dabei von der Begrenzungshülse 10 auf die oben bereits beschriebene Weise beschränkt worden, womit die dort genannten Vorteile erzielt worden sind.

Als Fluid kommt insbesondere Luft oder Oel zum Einsatz, die durch eine Handpumpe des Aufweitwerkzeugs oder eine motorische Pumpe unter Druck gesetzt und der Leitung 70 zugeführt wird. Stattdessen kann das Werkzeug auch einen Pressluftanschluss besitzen, aus dem Luft unter dem benötigten Druck bezogen werden kann. Ferner können auch mit Luft oder einem anderen Gas unter Druck befüllte Vorratskapseln verwendet werden, die in das oder an das Aufweitwerkzeug einsetzbar bzw. ansetzbar sind und dann mit der Leitung 70 verbindbar sind. Zur Bedienung ist vorzugsweise ein handbedienbares Ventil vorgesehen, durch welches das Zuführen des Fluids unter Druck in die Leitung 70 erfolgt und das Ablassen des Fluids aus der Leitung in die Umgebung im Falle von Luft bzw. in den Oeltank nach der erfolgen Aufweitung. Solche Ventile und deren Anschluss an eine Fluidquelle und an die Leitung 70 sind dem Fachmann bekannt und müssen hier nicht näher erläutert werden. Die Betätigungsanordnung 75 für die Aufweitung ist daher in Figur 10 nur als Block angedeutet, der ein solches Ventil und allenfalls auch die Fluidquelle umfasst und in Verbindung mit der Leitung 70 der Betätigungsanordnung steht.

Vorzugsweise weist das Gehäuse eine ringförmige und konisch verlaufende Fläche 69 auf, welche die Aufweitung im hinteren, betätigungsseitigen Bereich vor dem eigentlichen Aufweitbereich für das Rohr begrenzt, in welchem Aufweitbereich dann das Rohr und der Aufweitkörper zusammen angeordnet sind. Insbesondere ist die Fläche 69 zwischen der Befestigung des Aufweitkörpers am Werkzeug und einem im Gehäuse angeordneten Anschlag 67 für das Rohrende vorgesehen. Am vorderen, rohrseitigen Ende wird die Aufweitung durch das Endstück 62 des Aufweitkörpers mit der grösseren Wandstärke begrenzt. Der Aufweitkörper ist dabei bevorzugt einstückig aus einem handelsüblichen Elastomer gefertigt. Er kann auch Verstärkungen aus einem anderen Material aufweisen, welche die Aufweitung in radiale Richtung nicht hindern, aber eine Streckung in Längsrichtung verhindern oder vermindern.

Die Figuren 13 bis 15 zeigen eine weitere Ausführungsform des elastomeren Aufweitkörpers 22' und der Leitung 70, für welchen die obigen Ausführungen zum Aufweitkörper, soweit darauf anwendbar, ebenfalls gelten. Die übrigen Teile dieser Ausführungsform können gleich gestaltet sein wie beim Aufweitwerkzeug der Figuren 10 und 11 und sind daher nicht dargestellt. Der Aufweitkörper 22' der Figuren 13 und 14 ist im Ruhezustand dargestellt. Es ist ersichtlich, dass einerseits die Wandstärke des Aufweitkörpers im Aufweitbereich nicht gleichmässig ist, sondern einen Bereich 61' aufweist, in welchem die Wandstärke reduziert ist, um die Aufweitung zu erleichtern. In Kombination damit oder auch mit einem Aufweitkörper gemäss Figur 12 mit gleichmässiger Wandstärke, ist ferner ein Befestigungsmittel 63 innen am rohrseitigen Ende des Aufweitkörpers vorgesehen, durch welches dieses Ende in Längsrichtung fixiert ist, wenn am Befestigungsmittel 63 eine in Längsrichtung starre Halterung befestigt ist. Diese wird insbesondere von der Leitung 70 selber gebildet, die ja in der Regel aus Metall besteht und daher bei den hier wirkenden Kräften als starr anzusehen ist. Wie in den Figuren 14 und 15 als Beispiel ersichtlich, weist die Leitung 70 dazu an ihrem geschlossenen rohrseitigen Ende einen Gewindeabschnitt 74 auf, der in einen entsprechenden Gewindeabschnitt des Befestigungsmittels 63 eingreift. Dieses ist hier eine Hülse 63, z.B. aus Metall oder Kunststoff, die im Aufweitkörper 22' befestigt ist. Allenfalls kann dieser auch selber ein Befestigungsmittel ausbilden, welches mit der Halterung bzw. Leitung 70 in Eingriff bringbar ist.

Die Ausführung mit elastomerem Aufweitkörper stützt das Verbundrohr bei der Aufweitung gleichmässig und lückenlos ab und vermindert damit die Gefahr eines Reissens der metallischen Schicht noch weiter, welche bereits durch die Begrenzungshülse weitgehend vermieden wird. Der elastomere Aufweitkörper verhindert ferner, dass im Rohr bei der Aufweitung Abdrücke oder Markierungen entstehen. Der elastomere Aufweitkörper kann auch für verschiedene Rohrgrössen kostengünstig hergestellt werden.

Die Figuren 16 bis 18 zeigen eine Ausführungsform der erfindungsgemässen Rohrpresskupplung bzw. Rohrpressverbindung, womit eine Kupplung bzw. eine Rohrpressverbindung für beliebige Fittinge bezeichnet wird. Es kann sich z.B. um Kupplungsstücke, Reduzierstücke, Abzweigstücke wie z.B. T-Stücke und Kreuzungen oder Verbindungsstücke zu Einbauteilen handeln, die mit dieser Rohrpresskupplung versehen sind. Diesen gemeinsam ist, dass sie jeweils eine Stützhülse 41 aufweisen, welche zur Einführung in das aufgeweitete Rohr 12 vorgesehen ist. Diese Stützhülse, welche wiederum rotationssymmetrisch um ihre Mittellängsachse ist, was es in den Figuren 16 bis 18 erlaubt, nur den oberhalb der Mittellängsachse befindlichen Teil darzustellen, weist einen Hülsenteil 43 auf, welcher zur Einbringung in das aufgeweitete Rohrende des Rohres 12 ausgestaltet ist. Dazu weist das Stützhülsenteil 43 an seiner der aufgeweiteten Rohrinnenseite zugewandten Oberfläche mindestens ein Dichtungsmittel auf, insbesondere in der Form von O-Ringen 50, 51, sowie bevorzugt Verzahnungen 53 zum Eingriff in die Rohroberfläche bei der fertig verpressten Rohrpressverbindung. Gemäss der Erfindung ist nun die Rohrpressverbindung weiter mit einer Quetschhülse 40 versehen, welche ebenfalls rotationssymmetrisch und im Wesentlichen hohlzylindrisch ist. Diese Quetschhülse 40 ist vormontiert an der Stützhülse 41 befestigt, so dass Stützhülse und Quetschhülse eine nicht mehr trennbare Einheit bilden ausser durch Zerstörung dieser Teile bzw. ihrer Befestigung aneinander. Bevorzugt erfolgt die Befestigung dadurch, dass die Stützhülse 40 eine abgewinkelte umlaufende Nase bzw. einen Flansch 47 aufweist, welcher in eine umlaufende Nut 46 der Stützhülse 41 eingreift. Die Quetschhülse 40, welche z.B. aus Blech besteht, wird dabei bei der Herstellung der Rohrpresskupplung entsprechend verformt, dass sie in die Nut 46 eingreift und nicht mehr entfernbar an der Stützhülse festgelegt ist. Die Quetschhülse 40 bildet mit dem den Stützhülsenteil 43 überlappenden Quetschhülsenteil 42 einen Hohlraum 44, welcher zur Aufnahme des aufgeweiteten Endes des Rohres 12 dimensioniert ist. Die Aufweitung durch das Aufweitwerkzeug, welches vorzugsweise das vorstehend geschilderte Aufweitwerkzeug ist, muss daher an die Rohrpressverbindung angepasst sein und umgekehrt. Die Quetschhülse 40 erstreckt sich mit ihrem vom Anschlag und Halteteil 45 der Stützhülse wegweisenden Ende 48, 49 über den Stützhülsenteil 43 hinaus. Damit erstreckt sie sich über den Bereich 12'' des Rohres, in welchem dieses von seinem aufgeweiteten Durchmesser zurück in den Normaldurchmesser verläuft. Figur 17 zeigt, wie das aufgeweitete Rohr auf die Stützhülse 41 und insbesondere deren Stützhülsenteil 43 aufgeschoben wird. Das Rohr kommt damit zwischen Stützhülse und Quetschhülse zu liegen. Danach erfolgt auf bekannte Weise mit einem Presswerkzeug eine radiale Verpressung bzw. plastische Verformung der Quetschhülse 42, wodurch der in Figur 18 dargestellte Endzustand erreicht wird, in welchem das aufgeweitete Rohrende zwischen der Stützhülse und der Quetschhülse verpresst ist. Die Quetschhülse hält dabei durch ihre Befestigung 47 an der Stützhülse, welche durch das Verpressen des Abschnittes 54 der Quetschhülse, der über der Nase 53 der Stützhülse verläuft, noch verbessert wird, das Rohr gegen eine das Rohr von der Stützhülse abziehende Zugkraft fest. Dies wird neben dem Reibschluss zwischen Quetschhülse und Rohr weiter durch den Bereich 48 der Quetschhülse verbessert, welcher am abgewinkelten Bereich 12'' des Rohres anliegt. Ein Kragen 49 kann dieses Anliegen und das Halten des Rohres weiter verbessern.

Anstelle einer radialen Verpressung ist auch eine axiale Verpressung möglich, bei welcher eine zusätzliche Presshülse oder ein Presswerkzeugteil axial über die Quetschhülse und die Stützhülse gepresst wird, wobei die Presshülse Innenflächen aufweist, die wieder zu einer radialen Kraft bzw. Verpressung von Quetschhülse und Rohr an der Stützhülse führen.

## Patentansprüche

1. Aufweitwerkzeug (1) zum Aufweiten des Endes eines Rohres (12), welches Werkzeug ein Gehäuse (2) und einen durch eine Betätigungsanordnung (3, 30; 75) betätigbaren Aufweitkörper (22; 22') aufweist**, dadurch gekennzeichnet, dass** das Werkzeug eine am Werkzeuggehäuse befestigte, den Aufweitkörper in seiner Einführungsposition für das Rohr mit einem vorbestimmten Abstand umgebende Begrenzungshülse (10) aufweist, welche eine im Wesentlichen hohlzylindrische Aufweitbegrenzung für das aufzuweitende Rohrende bereitstellt.

2. Aufweitwerkzeug nach Anspruch 1, **dadurch gekennzeichnet, dass** die Begrenzungshülse (10) ein auswechselbares Teil des Werkzeugs ist, und insbesondere mittels eines Schraubgewindes (16) am Werkzeuggehäuse (2) befestigt ist.

3. Aufweitwerkzeug nach Anspruch 1 oder 2, **dadurch gekennzeichnet, dass** die Begrenzungshülse (10) einen Teil (18) der Führung des Aufweitkörpers (22'; 22) im Gehäuse bildet und insbesondere mit dem Gehäuse eine ringförmige Aufnahme für einen Flansch (28) des Aufweitkörpers (22) bildet.

4. Aufweitwerkzeug nach einem der Ansprüche 1 bis 3**, dadurch gekennzeichnet, dass** der Aufweitkörper von einem im Wesentlichen zylindrischen Element (22') mit einem Hohlraum (60) gebildet ist, in welchen Hohlraum durch die Betätigungsanordnung (75) ein Fluid unter Druck einbringbar ist, durch den das zylindrische Element radial aufweitbar ist.

5. Aufweitwerkzeug nach Anspruch 4, **dadurch gekennzeichnet, dass** das zylindrische Element (22') im Aufweitbereich(61) eine im Wesentlichen gleichmässige erste Wandstärke und bei seinem rohrseitigen Abschluss (62) eine grössere zweite Wandstärke aufweist.

6. Aufweitwerkzeug nach Anspruch 4, **dadurch gekennzeichnet, dass** das zylindrische Element (22') im Aufweitbereich (61') eine ungleichmässige Wandstärke aufweist und bei seinem rohrseitigen Abschluss (62) eine grössere Wandstärke als im Aufweitbereich aufweist.

7. Aufweitwerkzeug nach einem der Ansprüche 4 bis 6, **dadurch gekennzeichnet, dass** das zylindrische Element (22') bei seinem rohrseitigen Abschluss (62) im Hohlraum (60) ein Befestigungselement (63) aufweist, an welchem eine in Längsrichtung starre Halterung (70), welche insbesondere zugleich das Druckeinbringleitung (70) der Betätigungsanordnung ist, befestigbar ist, insbesondere, dass das zylindrische Element (22') an seinem rohrseitigen Abschluss im Hohlraum eine Gewindehülse (63) aufweist.

8. Aufweitwerkzeug nach einem der Ansprüche 4 bis 7, **dadurch gekennzeichnet, dass** die Betätigungsanordnung (75) eine Druckeinbringleitung (70) und eine Druckbereitstellungseinheit umfasst.

9. Aufweitwerkzeug nach einem der Ansprüche 3 bis 8, **dadurch gekennzeichnet, dass** das Gehäuse (2) oder ein anderes Bauteil des Werkzeugs eine im Wesentlichen konische Ringfläche (69) aufweist, welche die Aufweitung des Aufweitkörpers (22') vor dem eigentlichen Aufweitbereich begrenzt, und welche insbesondere zwischen der Befestigung des Aufweitkörpers (22') am Werkzeug und einem für das Rohrende bestimmten Anschlag (67) vorgesehen ist.

10. Aufweitwerkzeug nach einem der Ansprüche 1 bis 3, **dadurch gekennzeichnet, dass** der Aufweitkörper (22') mehrere starre Aufweitkörperteile (4 bis 9; 24 bis 27) aufweist, die in einer Einführungsposition aneinander anliegen und einen Aufweitkörper mit einem definierten Umfang bilden und die durch die Betätigungsanordnung des Werkzeugs radial auseinander bewegbar sind, um den Umfang des Aufweitkörpers zu vergrössern.

11. Aufweitwerkzeug nach Anspruch 10, **dadurch gekennzeichnet, dass** die Aufweitkörperteile durch ein erstes elastisches Glied (14) zusammengehalten und über ein zweites elastisches Glied (15) zum Werkzeuggehäuse abgestützt sind.

12. Aufweitwerkzeug nach Anspruch 10, **dadurch gekennzeichnet, dass** die Aufweitkörperteile durch ein erstes elastisches Glied (14) an einer ersten axialen Position zusammengehalten und an einer zweiten axialen Position von einem zweiten, elastisch aufweitbaren Glied (31), insbesondere von einer metallenen Feder, umgeben sind.

13. Aufweitwerkzeug nach einem der Ansprüche 1 bis 12, **dadurch gekennzeichnet, dass** dieses ein handbetriebenes Werkzeug ist, insbesondere, bei welchem der Fluiddruck handbetätigt erzeugt wird oder bei welchem ein handbetätigter, axial verschiebbarer Dorn die Aufweitkörperteile bewegt.

14. Aufweitwerkzeug nach einem der Ansprüche 10 bis 13**, dadurch gekennzeichnet, dass** der Aufweitkörper (22) aus drei oder vier Aufweitkörperteilen (24 - 27) besteht, welche eine im Querschnitt kreisrunde Aussenkontur aufweisen.

15. Verfahren zum Aufweiten des Endes von Mehrschichtverbundrohren, insbesondere von Kupferrohren mit einer äusseren Kunststoffummantelung, **dadurch gekennzeichnet, dass** das Rohrende in den Hohlraum (11) zwischen Aufweitkörper und Begrenzungshülse eines Aufweitwerkzeuges nach einem der Ansprüche 1 bis 14 eingebracht und durch Aufweitung des Aufweitkörpers bis zum Anliegen an der Innenseite der Begrenzungshülse aufgeweitet wird.

16. Rohrpresskupplung zur Verpressung eines Rohres (12) mit einem vorbestimmten Innendurchmesser, insbesondere zur Verpressung von Mehrschichtverbundrohren, mit einer Stützhülse (41) und einer Quetschhülse (40), wobei die Stützhülse mit der an dieser formschlüssig befestigten Quetschhülse eine vermontierte Einheit bildet, welche zur Aufnahme des aufgeweiteten Endes des Rohres dimensioniert ist.

17. Rohrpresskupplung nach Anspruch 16, **dadurch gekennzeichnet, dass** die Quetschhülse mittels einer ringförmig umlaufenden Nase (47) in einer ringförmigen Nut (46) der Stützhülse befestigt ist.

18. Rohrpresskupplung nach Anspruch 16 oder 17, **dadurch gekennzeichnet, dass** die Quetschhülse einen sich über das rohrseitige Ende der Stützhülse hinaus erstreckenden Abschnitt (48, 49) aufweist, welcher dazu bestimmt ist im verpressten Zustand im Bereich des Überganges (12'') vom aufgeweiteten Rohrende zum nicht aufgeweiteten Rohr am Rohr anzuliegen.

19. Verfahren zur Bildung einer Rohrpressverbindung, insbesondere für ein Mehrschichtverbundrohr, **dadurch gekennzeichnet, dass** eine Rohrpresskupplung nach einem der Ansprüche 16 bis 18 bereitgestellt wird, dass das Rohrende aufgeweitet wird, insbesondere mittels eines Aufweitwerkzeugs nach einem der Ansprüche 1 bis 14 bzw. mit den Schritten des Anspruchs 15, dass das aufgeweitete Rohrende in den Zwischenraum zwischen Stützhülse und Quetschhülse eingeführt und dass die Quetschhülse verpresst wird.
